# EUROPEAN PATENT SPECIFICATION

(11) **EP 3 868 145 B1**
(45) Date of publication and mention of the grant of the patent: **08.05.2024**
(21) Application number: 19779499.3
(22) Date of filing: 03.10.2019
(51) Int. Cl.: H04W 24/10, H04W 84/12

(54) **MEASURING CHANNEL PERFORMANCE IN WIRELESS LOCAL AREA NETWORKS**
MESSUNG DER KANALLEISTUNG IN DRAHTLOSEN LOKALEN NETZWERKEN
MESURE DE LA PERFORMANCE D'UN CANAL DANS DES RÉSEAUX LOCAUX SANS FIL

(30) Priority: 16.10.2018 EP 18200675
(43) Date of publication of application: 25.08.2021
(73) Proprietor: British Telecommunications public limited company, London E1 8EE (GB)
(72) Inventor: SCAHILL, Francis, London EC4V 5BT (GB); RINGLAND, Simon, London EC4V 5BT (GB)
(74) Representative: British Telecommunications public limited company Intellectual Property Department
(86) International application number: PCT/EP2019/076828
(87) International publication number: WO 2020/078731

(56) References cited:
- WO-A1-2018/134679
- WO-A2-2017/161361
- US-A1- 2018 084 471
- YAO GANG ET AL: "OppoScan: Enabling Fast Handoff in Dense 802.11 WMNs via Opportunistic Probing with Virtual Radio", 2017 IEEE 14TH INTERNATIONAL CONFERENCE ON MOBILE AD HOC AND SENSOR SYSTEMS (MASS), IEEE, 22 October 2017 (2017-10-22), pages 198-205, XP033255246, DOI: 10.1109/MASS.2017.59

## Description

This invention concerns wireless local area networks (WLANs). In particular, this invention relates to the performance of communication channels in a WLAN.

It is desirable for the quality of signals transmitted between devices in a WLAN be high enough to ensure effective transmission of data. To this end it is known to measure and compare the performance of the communication channels available within the WLAN, and to use only the better-performing channels in communications. Measuring the performance of a channel may include, for example, measuring the noise on the channel.

One known technique for measuring the performance of a channel is as follows. An access point communicates with a client device on a channel in the conventional way. When it is desired to obtain performance information in relation to other channels, communication on the working channel is paused while the access point performs a brief "scan" of the other channels. By "scan" it is meant that the access point switches through a series of channels, spending a fraction of a second on each and in that time making performance measurements. A disadvantage with such an approach is that it requires communication on the working channel to be paused. This results in a break in data flow which may be noticeable to a user.

WO 2017/161361 A2 concerns a WiFi network managed from a cloud-based system. The APs report to the cloud-based system measurements performed on their own operating channel.

US 2018/084471 A1 concerns a WLAN mesh network wherein a "main AP" controls a plurality of "small APs". The "system" collects measurements from the individual APs.

The present invention addresses and/or overcomes these and/or other disadvantages associated with the prior art.

The invention is set out in the appended set of claims.

According to a first aspect of the invention there is provided a method of determining a working communication channel for use by a first access point in a WLAN, the method comprising
making one or more performance measurements in respect of a communication channel at a proxy access point in the WLAN, the proxy access point being different to the first access point, and
using the one or more performance measurements to determine a working communication channel for use by the first access point.

These features enable a method to be performed which determines a working channel for the first access point using performance measurements measured at a second access point, the second access point being different to the first access point. As it makes performance measurements on behalf of the first access point, the second access point acts as a proxy and so is referred to here as the proxy access point. The performance measurements measured at the proxy access point may be similar to those that would have been measured at the first access point. This is particularly so if the proxy access point is experiencing similar environmental conditions to the first access point which may be the case, if, say, the proxy access point is located close to the first access point. The invention may be of use, for example, where the first access point is unable to make performance measurements on the communication channel. This could be because it is communicating with a client on a different channel.

The method may further comprise using the determined working communication channel as the working communication channel of the first access point. "Working communication channel" may be understood to mean the channel on which the first access point is configured to send data to and/or receive data from a client device or a plurality of client devices.

The method may further comprise identifying an access point in the WLAN for use as a proxy access point. The proxy access point may be the access point located closest to the first access point. Identifying the proxy access point may involve determining which access point has the highest signal strength as seen by the first access point. This determination may be made using RSSI measurements.

The method may include switching the working channel of the proxy access point to the communication channel before making the performance measurements. The method may further comprise comparing the one or more performance measurements with one or more performance measurements made in respect of a second communication channel. The method may comprise using the outcome of that comparison to select a working channel for the first access point. In particular, the method may comprise using the performance measurements made by the proxy channel to determine a ranking score for the first communication channel. The ranking score may be compared with the ranking scores of other channels available to the first access point to determine a working channel for the first access point.

A master access point may instruct the proxy access point to make performance measurements on the first communication channel. The proxy access point may send the performance measurements to the master access point for processing.

The method may further comprise identifying a further access point that is capable of communicating with the client device of the proxy access point. This is useful if, for example, the proxy access point is not idle and, instead, is communicating with a client device. The method may further comprise communicating between the further access point and the device. This may comprise disassociating the device with the proxy access point and associating the device to the further access point. The step of communicating between the further access point and the device may take place on the working channel of the further access point. The method may further comprise switching the working channel of the proxy access point to the first communication channel. The method may further comprise making performance measurements on the first communication channel. The method may further comprise terminating communication between the further access point and the device. This may comprise disassociating the device with the further access point. The method may further comprise re-starting communication between the proxy access point and the device. This may comprise re-associating the device to the proxy access point.

The method may further comprise, at a second access point, sending data to, and/or receiving data from, the client device. The second access point may be the proxy access point. The method may further comprise switching the working channel of the first access point from the second communication channel to the first communication channel. The method may further comprise making performance measurements in respect of the first communication channel at the first access point. These features enable a method to be performed in which the clients of the first access point are "relocated" to the second access point in order to "free up" the first access point to make performance measurements on a desired channel. This has the benefit that performance measurements can be obtained from a desired channel more quickly than with known techniques as there is no need to wait until the access point becomes idle.

The method may further comprise associating the device to the second access point. The method may further comprise terminating communication between the device and the first access point. This may comprise dissociating the device from the first access point. The step of dissociating the device from the first access point may take place before the step of, associating the device to the second access point.

The method may further comprise determining an appropriate access point in the WLAN to use as the second access point. This may involve determining which of the access points in the WLAN are capable of communicating with the client device. This may further involve determining which of the access points in the WLAN is most capable of communicating with the client device.

The step of, at a second access point, sending data to, and/or receiving data from, the device may take place on the working channel of the second access point.

The method may include the step of determining whether the first access point has a radio which is idle. If it is determined that the first access point has a radio which is idle, the method may include switching the working channel of the first access point to the first communication channel and making performance measurements in respect of the first communication channel.

The method may include the step of identifying the first communication channel. This may include determining which of the first access point's channels has provided the least recent performance data. This step may further include determining, from the multiple channels available to all access points in the WLAN, the channel and its corresponding access point for which the least recent performance data has been obtained.

Performance measurements may include measurements of the noise on a channel. Noise on the channel may include interference from sources including but not limited to microwave ovens and analogue TV senders. Alternatively or in addition, performance measurements may include measurements of the contention level on the channel. The contention level may be a measure of the amount of contending neighbouring Wi-Fi traffic operating on the channel. Measuring the contention level may involve measuring the number of other access points operating on the channel in the vicinity of the access point at issue. Alternatively or in addition, performance measurements made at an access point may include measurements of the access point's utilisation of the channel. This may be a measure of the proportion of time during which the access point is actively sending or receiving data.

The method may further include comparing the performance of the first communication channel with the performance of the other channels available to the first access point. The working channel for the first access point may be chosen using this comparison. This comparison may involve determining a ranking score for the first communications channel and for the other channels available to the first access point. The ranking score for a given channel may be determined using the performance measurements associated with that channel.

The step of identifying a second access point includes determining which access point in the WLAN is best able to communicate with the client device. This may include the client measuring the signal strength of the access points in the WLAN and comparing the measured signal strengths. The first access point may instruct the client to make the signal strength measurements. This may be achieved by sending an 802.11k measurement request to the client. The client may report the results to the first access point which may report the results to a master access point. The master access point may compare the measurements and may perform the step of identifying a second access point using this comparison. In some embodiments there are a plurality of client devices. In these embodiments the step of identifying a second access point includes determining which access point in the WLAN is best able to communicate with each of the client devices. Each feature mentioned in this description as relating to a client or a client device should be understood to also relate to a plurality of clients or client devices.

The step of communicating between the second access point and the device may comprise the device sending data to the second access point, the data being intended for transmission beyond the second access point. The data may be intended for transmission over the internet. Alternatively, the data may be intended for transmission to a destination on the local LAN. The step of communicating between the second access point and the device may comprise initiating communication between the second access point and the device on the working channel of the second access point.

The method may further comprise switching the working channel of the first access point back from the first communication channel to the second communication channel. Communication may then restart between the first access point and the device on the second communication channel. This may comprise dissociating the device from the second access point and may comprise re-associating the device with the first access point.

In some embodiments the method is repeated using a new first communication channel. In such embodiments the first access point may be a different access point to the first access point used in the first iteration of the method. The method may be repeated a plurality of times.

According to a second aspect of the invention there is provided a data carrier comprising machine-readable instructions for performing the method according to the first aspect of the invention.

For illustration only, a specific embodiment of the invention will now be described in detail with reference to the accompanying drawings, in which:
Figure 1 is a schematic drawing of the network of the invention;
Figure 2 is a schematic drawing of the network of the invention after certain method steps according to the invention have been performed;
Figure 3 is a schematic drawing of the network of the invention after other method steps according to the invention have been performed;

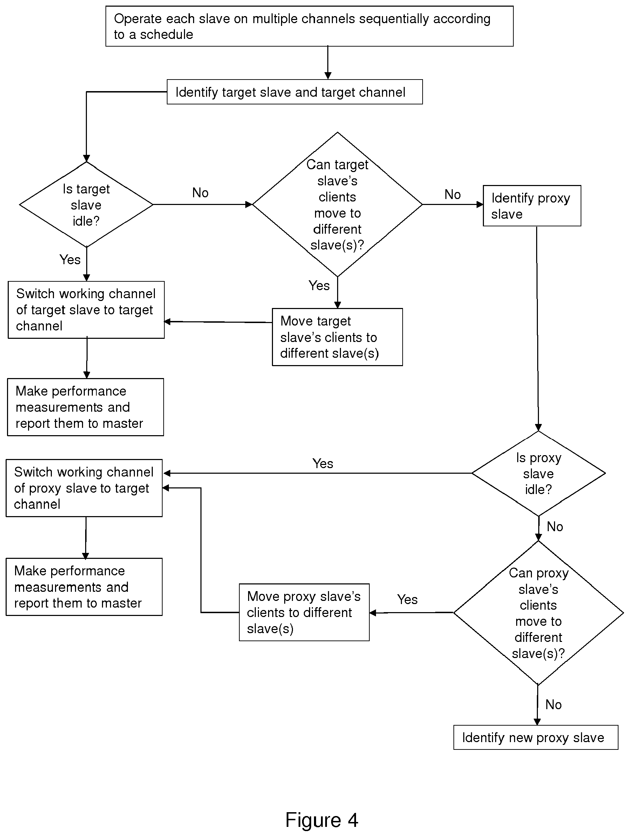

Figure 4 is a flow chart showing the method of the invention.

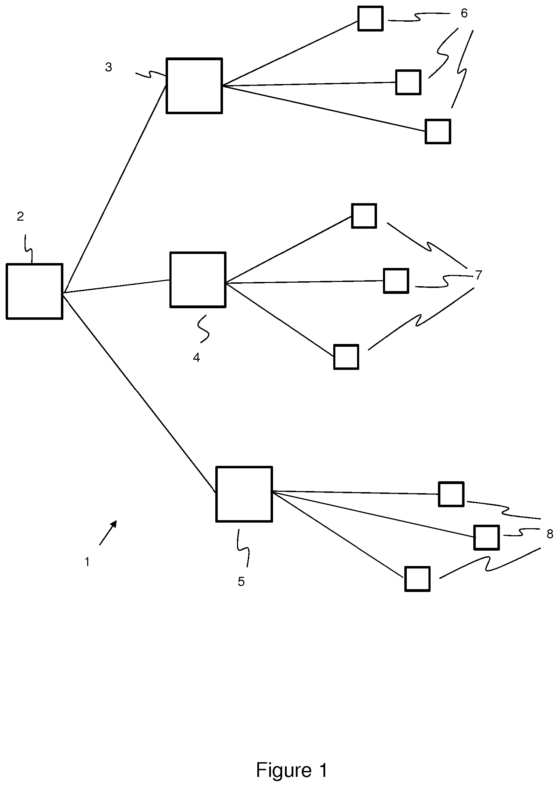

Figure 1 shows a Wi-Fi network in accordance with the invention. There is a master access point 2 (which I will refer to as master AP 2) which can communicate wirelessly with three slave access points 3,4,5 (which I will refer to here as slaves 3,4,5). Slave 3 can communicate wirelessly with three client devices labelled 6 in Fig 1. Slave 4 can communicate wirelessly with three client devices labelled 7 in Fig 1. Slave 5 can communicate wirelessly with three client devices labelled 8 in Fig 1. In the specific embodiment described here, each of the three slaves has one radio which it uses for communicating with its respective client devices.

Each slave 3,4,5 can communicate with its respective devices on one of several different channels within the frequency band of operation of that slave 3,4,5. The quality of each channel is primarily affected by two factors: interference (e.g. from microwave ovens and analogue TV senders); and other Wi-Fi traffic. These two factors reduce the quality of communication on a given channel. However, the extent to which the two factors reduce the quality of the channel varies from one channel to another and also varies over time. It is desirable for each slave to communicate with its clients on the best-performing channel in terms of signal quality.

To this end, each slave selects a particular channel as its working channel for a period of one week. Therefore, for one week the slave 3 communicates with its clients 6 on that working channel. At regular intervals over the course of the week, the slave 3 measures the level of noise on the working channel, the level of neighbour contention on the working channel and its "own utilisation". By neighbour contention level it is meant the proportion of the time that slaves other than the slave 3 and its associated clients are putting sufficient energy onto the channel that the channel appears busy and transmission between the slave 3 and its clients 6 is not possible. The "own utilisation" measurement is the amount of time that data is being transmitted from or received by the slave 3. Specifically, this is the proportion of each minute that the slave 3 is sending or receiving data.

The slave 3 sends the measured data to the master 2. The master 2 uses the measured data to determine the average noise level and neighbour contention level for the slave 3. When the week has elapsed, the slave 3 switches its radio to a different channel and proceeds to communicate with its clients 6 on that channel for one week. Over the course of that week, the slave 3 makes regular measurements of the noise and contention levels and sends them to the master 2. This process repeats using each of the slave's available channels as the working channel in accordance with a schedule. The master 2 compares the determined average noise level for each channel and also compares the determined average contention level for each channel from these comparisons determines the worst performing channel. The slave 3 then cycles through each of the channels again, each for one week as before, except for the determined worst performing channel which is left out of this cycle. As in the first cycle, the slave 3 makes noise and contention measurements for each working channel which are averaged and compared as before. As before, the worst performing channel is excluded from the subsequent cycle.

If, at the end of each week-long period, a working channel is in use (i.e. not idle) then the change in working channel is delayed. Furthermore, if a channel has been excluded from the cycle for some time, the master 2 will not have any recent performance data in respect of that channel. For these reasons, it may be that the master has received insufficient recent noise and contention data in respect of one or more channels to enable it to make a meaningful performance comparison between all the channels. Therefore, the master 2 monitors the amount of performance data it has received from the slaves and identifies one channel of one slave in respect of which it has received the least recent performance data. I will refer to this channel as the "target channel" and the slave as the "target slave". In this description, I will consider slave 3 to be the target slave.

The master 2 asks the target slave 3 whether or not its radio is idle. If the radio is idle, the master 2 instructs the target slave 3 to switch its radio to the target channel for a period of time, and to make performance measurements on the target channel over the course of that period. When the period has elapsed, the target slave 3 returns to its normal channel schedule. The target slave 3 sends the measured performance data to the master 2 which uses it in the channel performance comparison process referred to above.

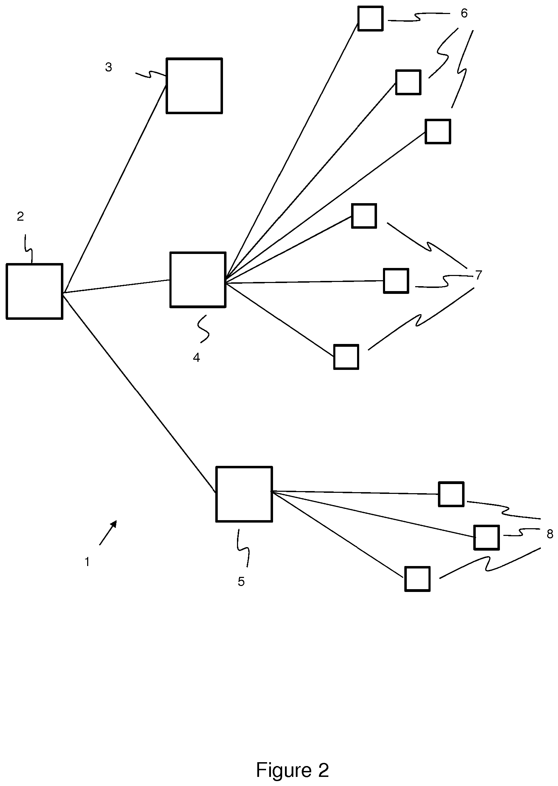

If the target slave's radio is not idle, the master 2 instructs the target slave 3 to test whether the target slave's clients would be able to switch to communicating with one or more of the other slaves 4,5 rather than the target slave 3. The target slave 3 does this by sending an 802.11k measurement request to each client 6, asking it to measure and report the signal strength at which it sees each of the other slaves 4,5. The target slave 3 reports this information to the master 2. If the signal strength is sufficient for the clients 6 to switch to another slave(s), the master instructs the target slave 3 to switch its clients 6 to that other slave(s) using 802.11v BSS transition requests. The target slave 3 does so, then switches its radio to the target channel for a period of time and makes performance measurements on the target channel over the course of that period. This situation is shown in Fig. 2. The target slave 3 sends the measured performance data to the master 2 which uses it in the channel performance comparison process referred to above. When the period has elapsed, the target slave 3 returns to its normal channel schedule. The master 2 then performs a load-rebalancing procedure which may involve switching the clients which were moved to a different slave back to the target slave 3. That procedure will not be described in detail here.

If it is not possible to switch the clients 6 to a different slave 4,5, the master determines which of the other slaves 4,5 is located nearest to the target slave 3. The master 2 does this by analysing RSSI measurements for signals sent between the target slave 3 and neighbouring slaves 4,5. I will refer to the slave determined as the nearest to the target slave 3 as the proxy slave. In the presently described embodiment, slave 4 is the proxy slave.

The master 2 asks the proxy slave 4 whether or not its radio is idle. If the radio is idle, the master 2 instructs the proxy slave 4 to switch its radio to the target channel for a period of time, and to make performance measurements on the target channel over the course of that period. When the period has elapsed, the proxy slave 4 returns to its normal channel schedule. The proxy slave 4 sends the measured performance data to the master 2 which uses it in the channel performance comparison process referred to above.

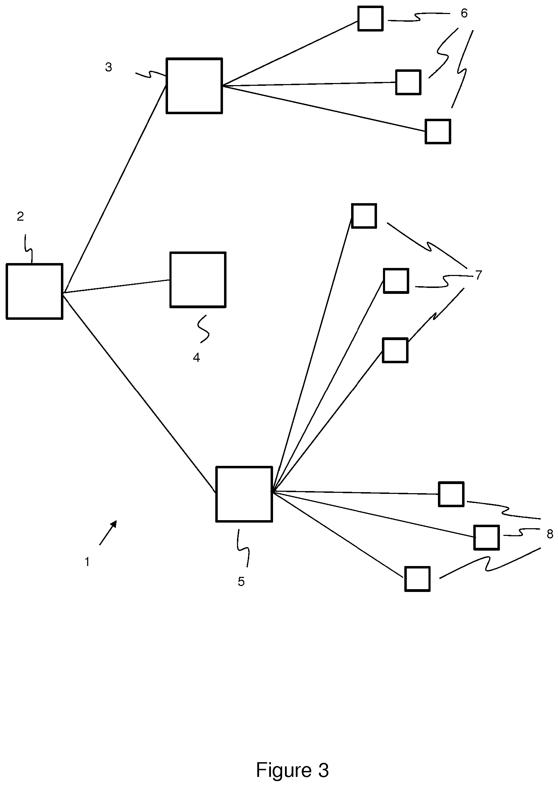

If the proxy slave's radio is not idle, the master 2 instructs the proxy slave 4 to test whether the proxy slave's clients would be able to switch to communicating with one or more of the other slaves 4,5 rather than the proxy slave 4. The proxy slave 4 does this by sending an 802.11k measurement request to each client 7, asking it to measure and report the signal strength at which it sees each of the other slaves. The proxy slave 4 reports this information to the master 2. If it is possible for the clients 7 to switch to another slave(s), the master instructs the proxy slave 4 to switch its clients to that other slave(s) using 802.11v BSS transition requests. The proxy slave 4 does so, then switches its radio to the target channel for a period of time and makes performance measurements on the target channel over the course of that period. This situation is shown in Fig. 3. In Fig. 3, the proxy slave 4 has switched its client to slave 5. When the period has elapsed, the proxy slave 4 sends the measured performance data to the master which uses it in the channel performance comparison process referred to above.

As proxy slave 4 is located in the vicinity of target slave 3, the communication conditions experienced by proxy slave 4 are similar to those experienced by target slave 3. Therefore, the averaged noise and contention measurements that the master 2 obtains using the proxy slave's performance data will be similar to those which it would have obtained had it used the target channel's performance data. Therefore, the master 2 uses the averaged noise and contention measurements obtained using the proxy slave's data as if they had been obtained using the target slave's data in the channel performance comparison process referred to above.

When the period has elapsed, the proxy slave 4 returns to its normal channel schedule. The master 2 then performs a load-rebalancing procedure which may involve switching the clients which were moved to a different slave(s) back to the proxy slave 4. This procedure will not be described in detail here.

If it is not possible to switch the clients to a different slave, the master determines which slave other than the proxy slave 4 is the next nearest to the target slave 3. The master 2 does this by analysing RSSI measurements for signals sent between the target slave 3 and its neighbouring slaves. The process described above is then repeated with this newly identified slave as the proxy slave.

## Claims

1. A method of determining a working communication channel for use by a first access point in a Wireless Local Area Network, WLAN, the method comprising:
identifying a proxy access point in the WLAN, the proxy access point being different to the first access point and being an access point at which performance measurements for use in the determination of the working communication channel of the first access point, can be made,
dissociating the proxy access point from a client device to which it is associated, associating the client device to a further access point in the WLAN, making one or more performance measurements in respect of a communication channel at the proxy access point and
using the one or more performance measurements to determine a working communication channel for use by the first access point.

2. The method as claimed in claim 1, wherein the method further comprises using the determined working communication channel as the working communication channel of the first access point.

3. The method as claimed in either claim 1 or claim 2, the method further comprising comparing the one or more performance measurements with one or more performance measurements made in respect of a second communication channel.

4. The method as claimed in claim 3, the method further comprising using the outcome of that comparison to select a working channel for the first access point.

5. The method as claimed in any preceding claim, the method further comprising using the performance measurements made by the proxy access point to determine a ranking score for the first communication channel.

6. The method as claimed in claim 5, wherein the ranking score is compared with the ranking scores of other channels available to the first access point to determine a working channel for the first access point.

7. The method as claimed in any preceding claim, wherein the method further comprises determining an access point in the WLAN for use as the proxy access point.

8. The method as claimed in claim 7, further comprising determining which access point is located closest to the first access point.

9. The A- method as claimed in claim 8, further comprising determining which access point has the highest signal strength as seen by the first access point.

10. The method as claimed in claim 9, further comprising using RSSI (Received Signal Strength Indicator) measurements to determine which access point has the highest signal strength.

11. The method as claimed in any preceding claim wherein a master access point instructs the proxy access point to make performance measurements on the first communication channel.

12. The method as claimed in claim 11, wherein the proxy access point sends the performance measurements to the master access point for processing.

13. The method as claimed in any preceding claim, the method further comprising disassociating the client device with the further access point.

14. A data carrier comprising machine-readable instructions which when executed by a computer, cause the computer to perform the method according to any of the claims 1-13.

## Patentansprüche

1. Verfahren zum Bestimmen eines Arbeitskommunikationskanals zur Verwendung durch einen ersten Zugriffspunkt in einem Drahtlosen Lokalen Netzwerk, WLAN, wobei das Verfahren umfasst:
Identifizieren eines Proxy-Zugriffspunktes im WLAN, wobei sich der Proxy-Zugriffspunkt von dem ersten Zugriffspunkt unterscheidet und ein Zugriffspunkt ist, an dem Leistungsmessungen zur Verwendung bei der Bestimmung des Arbeitskommunikationskanals des ersten Zugriffspunktes erfolgen können,
Trennen des Proxy-Zugriffspunktes von einer ihm zugeordneten Client-Vorrichtung,
Zuordnen der Client-Vorrichtung zu einem weiteren Zugriffspunkt in dem WLAN, wobei eine oder mehrere Leistungsmessungen in Bezug auf einen Kommunikationskanal an dem Proxy-Zugriffspunkt erfolgen und Verwenden der einen oder mehreren Leistungsmessungen, um einen funktionierenden Kommunikationskanal zur Verwendung durch den ersten Zugriffspunkt zu bestimmen.

2. Verfahren nach Anspruch 1, wobei das Verfahren ferner das Verwenden des bestimmten Arbeitskommunikationskanals als Arbeitskommunikationskanal des ersten Zugriffspunktes umfasst.

3. Verfahren nach Anspruch 1 oder Anspruch 2, wobei das Verfahren ferner das Vergleichen der einen oder mehreren Leistungsmessungen mit einer oder mehreren Leistungsmessungen umfasst, die in Bezug auf einen zweiten Kommunikationskanal erfolgen.

4. Verfahren nach Anspruch 3, wobei das Verfahren ferner das Verwenden des Ergebnisses dieses Vergleichs umfasst, um einen Arbeitskanal für den ersten Zugriffspunkt auszuwählen.

5. Verfahren nach einem der vorhergehenden Ansprüche, wobei das Verfahren ferner das Verwenden der von dem Proxy-Zugriffspunkt erfolgten Leistungsmessungen umfasst, um eine Rangfolge für den ersten Kommunikationskanal zu bestimmen.

6. Verfahren nach Anspruch 5, wobei der Rangordnungswert mit den Rangordnungswerten anderer für den ersten Zugriffspunkt verfügbarer Kanäle verglichen wird, um einen Arbeitskanal für den ersten Zugriffspunkt zu bestimmen.

7. Verfahren nach einem der vorhergehenden Ansprüche, wobei das Verfahren ferner das Bestimmen eines Zugriffspunktes im WLAN zur Verwendung als Proxy-Zugriffspunkt umfasst.

8. Verfahren nach Anspruch 7, das ferner das Bestimmen des Zugriffspunktes umfasst, der sich am nächsten zum ersten Zugriffspunkt befindet.

9. Verfahren nach Anspruch 8, das ferner das Bestimmen, welcher Zugriffspunkt aus Sicht des ersten Zugriffspunktes die höchste Signalstärke aufweist, umfasst.

10. Verfahren nach Anspruch 9, das ferner das Verwenden von RSSI-Messungen (Received Signal Strength Indicator) umfasst, um zu bestimmen, welcher Zugriffspunkt die höchste Signalstärke aufweist.

11. Verfahren nach einem der vorhergehenden Ansprüche, wobei ein Master-Zugriffspunkt den Proxy-Zugriffspunkt anweist, Leistungsmessungen auf dem ersten Kommunikationskanal vorzunehmen.

12. Verfahren nach Anspruch 11, wobei der Proxy-Zugriffspunkt die Leistungsmessungen zum Verarbeiten an den Master-Zugriffspunkt sendet.

13. Verfahren nach einem der vorhergehenden Ansprüche, wobei das Verfahren ferner das Trennen der Client-Vorrichtung von dem weiteren Zugriffspunkt umfasst.

14. Datenträger, der maschinenlesbare Anweisungen umfasst, die, wenn sie von einem Computer ausgeführt werden, den Computer veranlassen, das Verfahren nach einem der Ansprüche 1-13 durchzuführen.

## Revendications

1. Procédé de détermination d'un canal de communication de travail à utiliser par un premier point d'accès dans un réseau local sans fil, WLAN, le procédé comprenant les étapes suivantes :
identifier un point d'accès mandataire dans le WLAN, le point d'accès mandataire étant différent du premier point d'accès et étant un point d'accès au niveau duquel les mesures de performance à utiliser dans la détermination du canal de communication de travail du premier point d'accès peuvent être effectuées,
dissocier le point d'accès mandataire d'un dispositif client auquel il est associé,
associer le dispositif client à un autre point d'accès du WLAN, en effectuant une ou plusieurs mesures de performance concernant un canal de communication au niveau du point d'accès mandataire, et
utiliser une ou plusieurs mesures de performance pour déterminer un canal de communication de travail à utiliser par le premier point d'accès.

2. Procédé tel que revendiqué dans la revendication 1, dans lequel le procédé comprend en outre d'utiliser le canal de communication de travail déterminé comme canal de communication de travail du premier point d'accès.

3. Procédé tel que revendiqué dans la revendication 1 ou la revendication 2, le procédé comprenant en outre de comparer les une ou plusieurs mesures de performance à une ou plusieurs mesures de performance effectuées concernant un second canal de communication.

4. Procédé tel que revendiqué dans la revendication 3, le procédé comprenant en outre d'utiliser le résultat de cette comparaison pour sélectionner un canal de travail pour le premier point d'accès.

5. Procédé tel que revendiqué dans l'une quelconque des revendications précédentes, le procédé comprenant en outre d'utiliser les mesures de performance effectuées par le point d'accès mandataire pour déterminer un score de classement pour le premier canal de communication.

6. Procédé tel que revendiqué dans la revendication 5, le score de classement étant comparé aux scores de classement des autres canaux disponibles pour le premier point d'accès afin de déterminer un canal de travail pour le premier point d'accès.

7. Procédé tel que revendiqué dans l'une quelconque des revendications précédentes, dans lequel le procédé comprend en outre de déterminer un point d'accès dans le réseau WLAN pour une utilisation en tant que point d'accès mandataire.

8. Procédé tel que revendiqué dans la revendication 7, comprenant en outre de déterminer quel point d'accès est situé le plus près du premier point d'accès.

9. Procédé tel que revendiqué dans la revendication 8, comprenant en outre de déterminer quel point d'accès a l'intensité de signal la plus élevée du point de vue du premier point d'accès.

10. Procédé tel que revendiqué dans la revendication 9, comprenant en outre d'utiliser des mesures RSSI (indicateur d'intensité du signal reçu) pour déterminer quel point d'accès a l'intensité de signal la plus élevée.

11. Procédé tel que revendiqué dans l'une quelconque des revendications précédentes, dans lequel un point d'accès maître donne pour instruction au point d'accès mandataire d'effectuer des mesures de performance sur le premier canal de communication.

12. Procédé tel que revendiqué dans la revendication 11, dans lequel le point d'accès mandataire envoie les mesures de performance au point d'accès maître pour traitement.

13. Procédé tel que revendiqué dans l'une quelconque des revendications précédentes, le procédé comprenant en outre de dissocier le dispositif client d'avec le point d'accès supplémentaire.

14. Support de données comprenant des instructions lisibles par machine qui, lorsqu'elles sont exécutées par un ordinateur, amènent ce dernier à exécuter le procédé selon l'une quelconque des revendications 1 à 13.
